# EUROPÄISCHE PATENTSCHRIFT

(11) **EP 0 719 946 B1**
(45) Veröffentlichungstag und Bekanntmachung des Hinweises auf die Patenterteilung: **06.06.2001**
(21) Anmeldenummer: 95120454.4
(22) Anmeldetag: 22.12.1995
(51) Int. Cl.: F04F 5/26, B65G 53/58

(54) **Mehrstufiges Hochdruck-Strahlrohr**
Multi-stage high pressure jet pipe
Tuyau à jet multiétagé à haute pression

(30) Priorität: 28.12.1994 DE 4446935
(43) Veröffentlichungstag der Anmeldung: 03.07.1996
(73) Patentinhaber: Wax, Edmund Prof. Dr., D-66663 Merzig (DE)
(72) Erfinder: Wax, Edmund Prof. Dr., D-66663 Merzig (DE)
(74) Vertreter: Sparing - Röhl - Henseler Patentanwälte

(56) Entgegenhaltungen:
- CH-A- 101 872
- DE-A- 2 225 405
- DE-C- 3 836 661
- FR-A- 2 637 880
- US-A- 1 892 920

## Beschreibung

Die Erfindung betrifft ein mehrstufiges Hochdruck-Strahlrohr zur naßmechanischen Behandlung körniger Materialien und deren Schlämmungen nach dem Oberbegriff des Anspruchs 1.

Ein derartiges mehrstufiges Hochdruck-Strahlrohr ist aus der CH-A-101 872 bekannt. Das dort beschriebene Hochdruck-Strahlrohr ist baukastenartig zusammengesetzt aus einem Ansaugstutzen, einer ersten Düse, die einen ersten Düsenring beinhaltet, einer ersten Strahlrohrstufe, einer zweiten Düse, die einen zweiten Düsenring beinhaltet, einer zweiten Strahlrohrstufe und einem Auslaßstutzen.

Aus der DE 38 36 661 C1 ist ferner ein mehrstufiges Hochdruck-Strahlrohr insbesondere zur Aufbereitung verschmutzter Böden bekannt, das eingangsseitig ein Boden-Luft-Gemisch ansaugt und durch einen Triebstrahl in Form eines Wasserkegelmantels hindurchführt. Wegen des durch die heftige Verwirbelung der Bodenkörper bedingten starken Verschleisses werden bei diesem mehrstufigen Hochdruck-Strahlrohr eine Zufuhrleitung und zwei Segment-Rohrabschnitte mit zugehöriger Ringkammer und Düsenring derart ausgebildet und hintereinander angeordnet, daß die Ringkammern samt Düsenring auswechselbar sind. Dazu sind die Rohrabschnitte in jeweils ein Strahlrohrgehäuse einschiebbar, das mit einund ausgangsseitigen Stutzen versehen ist. Die Stutzen erlauben, die Rohrabschnitte koaxial zu halten und die Ringkammern mit Düsenring anzuflanschen, wodurch diese einzeln austauschbar sind.

Nachteilig hierbei ist die Notwendigkeit von Strahlrohrgehäusen als Halte- und Tragvorrichtung. Die Konstruktion ist folglich aufwendig und verlangt hohe Passgenauigkeit der Einzelteile. Darüberhinaus sind Sonderteile, wie z.B. die Zufuhrleitung, notwendig, um das Hochdruck-Strahlrohr voll funktionsfähig zu machen.

Aufgabe der Erfindung ist es daher, ein mehrstufiges Hochdruck-Strahlrohr nach dem Oberbegriff des Anspruchs 1 zu schaffen, das einfach aufgebaut und eine schnelle Durchführung von Wartungsarbeiten, insbesondere durch Austausch von Verschleißteilen, erlaubt.

Diese Aufgabe wird durch den kennzeichnenden Teil des Anspruchs 1 gelöst.

Hierdurch wird ein mehrstufiges Hochdruck-Strahlrohr geschaffen, bei dem durch die Integration der Ringkammer mit Düsenring in den ausgangsseitigen Flansch eines Segment-Rohrabschnitts ein Einheitsteil geschaffen wird, das zum Aufbau eines mehrstufigen Hochdruck-Strahlrohrs einfach aneinandersetzbar ist. Zusätzliche Konstruktionsteile tragende Gehäuse können entfallen.

Die in Strömungsrichtung zunehmende Wandstärke liefert eine für die Ringkammer erforderliche Einbautiefe, die neben einer seitlichen Abstützung auch eine zumindest teilweise seitliche Abschirmung erlaubt, so daß auch aus Sicherheitsgründen kein Gehäuse erforderlich ist. Außerdem erhöht die in Strömungsrichtung zunehmende Wandstärke die Einsatzdauer der Segment-Rohrabschnitte, da eine dickere Rohrwandung gerade dort ausgebildet wird, wo die Verwirbelung und damit der Verschleiß des Rohrabschnitts am stärksten ist, d.h. im Rohrinneren hinter einem axialen Brennpunkt des kegelförmigen Fluidschleiers.

Weiterhin sind für die Durchführung von Wartungsarbeiten lediglich die ausgangsseitigen und eingangsseitigen Flansche aufeinanderfolgender Segment-Rohrabschnitte zu lösen. Durch eine Beabstandung voneinander getrennter Segment-Rohrabschnitte wird der Düsenring des jeweiligen ausgangsseitigen Flansches frei zugänglich. Die Düsen, die einer starken Abnutzung unterliegen und deshalb vorzugsweise als Düseneinsätze ausgebildet sind, können dann einfach ausgewechselt werden. Schließlich ist auch ein Auswechseln eines gesamten Segment-Rohrabschnitts einfach und schnell durchführbar.

Der ein- und ausgangsseitige Flansch aufeinanderfolgender Segment-Rohrabschnitte können einfache glatte Flansche sein, die durch eine kraftschlüssige Verbindung einen fluiddichten Verschluß der Segment-Rohrabschnitte gewährleisten.

Die Düsen eines Düsenrings sind zur Einspeisung eines kegelförmigen Fluidmantels in das Rohrinnere der jeweiligen Segment-Rohrabschnitte vorzugsweise auf einem in Umfangsrichtung umlaufenden und gegen die Rohrachse mit negativer Neigung angeordneten Stirnflächenteilstücks des jeweiligen ausgangsseitigen Flansches angeordnet. Die so angeordneten Düsen liegen dann nicht direkt in der Strömung des angesaugten Gemisches und sind deshalb zumindest etwas geschützt positioniert.

Die in Strömungsrichtung zunehmende Wandstärke erfolgt vorzugsweise derart, daß die Wandstärke radial nach innen zunimmt, d.h. das Rohrinnere eines Rohrabschnitts kegelförmig verjüngt, während in Richtung des ausgangsseitigen Flansches die Rohrwandung sich zur Rohrachse hin konisch verstärkt. Dabei kann die Rohrwandung einen zylinderförmigen Umriß besitzen, der eine Anbringung von Führungsmitteln an den Segment-Rohrabschnitten für eine zeitweilige axiale Verschiebung derselben für Wartungsarbeiten vereinfacht.

Die erfindungsgemäße Gestaltung der Segment-Rohrabschnitte erlaut desweiteren die Verwendung von Teilstücken derselben als Saugeinlaß und/ oder Strömungeinlaß. Ein Segment-Rohrabschnitt ohne oder mit abgetrenntem ausgangsseitigem Flansch kann als Strömungsauslaß angeflanscht werden, wobei die Länge des jeweiligen Rohrabschnitts wählbar ist.

Ebenso kann ein Segment-Rohrabschnitt ohne oder mit abgetrenntem eingangsseitigem Flansch als Saugeinlaß verwendet werden, wobei die Länge des hier sich jeweils zurückerstreckenden Rohrabschnitts wiederum wählbar ist.

Zur Verringerung einer Abnutzung der Rohrabschnitte kann eine die Rohrinnenwandung der Segment-Rohrabschnitte abdeckende Schutzverkleidung einsetzbar sein. Diese Innenverkleidung kann von einem Schutzrohr gebildet werden, das auswechselbar in die Segment-Rohrabschnitte einsetzbar ist.

Um einen Verschleiß des die Ringkammer mit dem Düsenring tragenden ausgangsseitigen Flansches an der dem Rohrinneren zugewandten Seite zu verringern, kann die Schutzverkleidung zumindest teilweise diese Flanschinnenseite abdecken.

Für eine axiale Verschiebbarkeit der Segment-Rohrabschnitte und damit für die Durchführung von Wartungsarbeiten, insbesondere das Austauschen der Düsen, können diese an einem Träger axial verschiebbar geführt sein. Bevorzugte Führungsmittel sind in den Ansprüchen 12 und 13 angegeben.

Als Flanschverschlüsse sind die bekannten Verschlußarten, wie z.B. Flanschschrauben, Flanschklammern etc., einsetzbar. Besonders bevorzugt sind hydraulisch arbeitende Hammerkopfverschlüsse, die ein schnelles öffnen und Verschließen des Flansches ermöglichen und letztlich auch eine Automatisierung erlauben.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch einen Schnitt durch ein mehrstufiges Hochdruck-Strahlrohr gemäß einem ersten Ausführungsbeispiel,
Fig. 2 zeigt schematisch einen Schnitt durch ein mehrstufiges Hochdruck-Strahlrohr gemäß einem zweiten Ausführungsbeispiel.

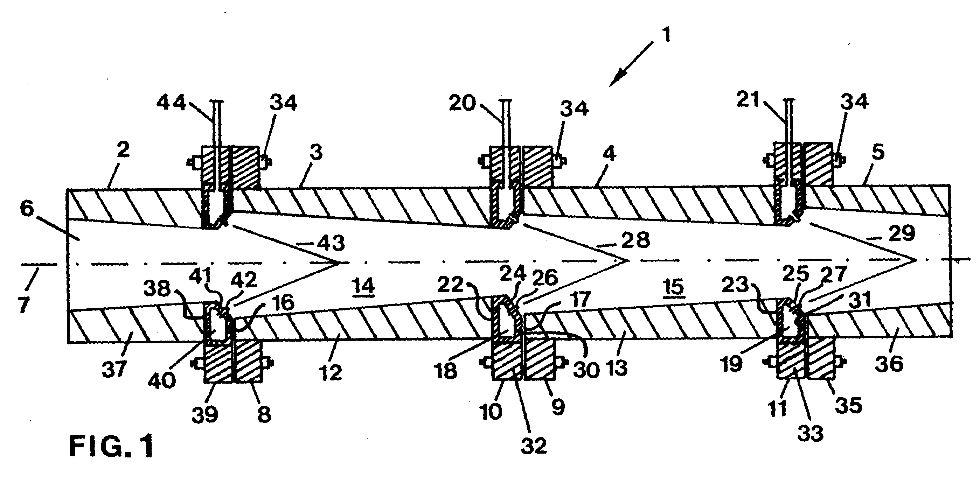

Fig. 1 zeigt ein erstes Ausführungsbeispiel eines mehrstufigen Hochdruck-Strahlrohrs 1 zur naßmechanischen Behandlung körniger Materialien, insbesondere Bodenmaterialien, ölkontaminierter Schüttgüter, Zunder- und Sintermaterialien, etc., und deren Schlämmungen. Mittels eines solchen mehrstufigen Hochdruck-Strahlrohrs 1 wird ein Feststoff-Luft-Gemisch angesaugt und in Fluidstrahlkegel gefördert, der eine heftige Verwirbelung des Eintrags verursacht, was zu einer Homogenisierung des Feststoffmaterials und zu einer Schadstoffabtrennung durch Absprengen der anhaftenden Schadstoffe führt.

Das mehrstufige Hochdruck-Strahlrohr 1 umfaßt dazu einen eingangsseitigen Saugeinlaß 2, daran anschließend mehrere lösbar hintereinander befestigte Segment-Rohrabschnitte 3, 4 und einen ausgangsseitigen Strömungsauslaß 5, die zusammen einen durchgehenden Strömungskanal 6 entlang einer Strahlrohrachse 7 definieren.

Die Segment-Rohrabschnitte 3, 4 besitzen jeweils eingangseitig einen Flansch 8, 9 und ausgangsseitig einen Flansch 10, 11. Zwischen dem eingangsseitigen Flansch 8, 9 und dem ausgangsseitigen Flansch 10, 11 erstreckt sich jeweils eine Rohrwandung 12, 13. Die Rohrwandungen 12, 13 besitzen eine Wandstärke, die zum ausgangsseitigen Flansch 10, 11 hin, d.h. in Strömungsrichtung, zunimmt. Die Rohrwandungen 12, 13 verstärken sich also in Richtung des ausgangsseitigen Flansches 10, 11 konisch. Bevorzugt werden die Segment-Rohrabschnitte 3, 4 aus einem zylinderförmigen Vollrohr hergestellt, so daß die zunehmende Wandstärke zu einem kegelförmig sich verjüngenden Rohrinneren 14, 15 führt, während der Außendurchmesser der Rohrwandung 12, 13 zwischen den Flanschen 8, 10 und 9, 11 gleich bleibt.
Der eingangsseitige Flansch 8, 9 ist als einfacher glatter Flansch ausgebildet, der außen auf den Rohrwandungen 12, 13 befestigt ist und mit einer eingangsseitigen Stirnfläche 16, 17 der Rohrwandung 12, 13 fluchtet. Alternativ kann der eingangsseitige Flansch 8, 9 an der Stirnfläche 16, 17 der Rohrwandung 12, 13 befestigt sein und von dieser sich erstrecken.

Der ausgangsseitige Flansch 10, 11 wird von einer Ringkammer 18, 19 gebildet, die über einen Stutzen 20, 21 an eine Hochdruckfluidquelle anschließbar ist. Die Ringkammer 18, 19 ist an der ausgangsseitigen Stirnfläche 22, 23 der Rohrwandung 12, 13 befestigt und trägt einen in dem Strömungskanal 6 liegenden Düsenring bzw. Düsenkranz 24, 25. Der Düsenring 24, 25 weist eine Mehrzahl umfangsseitig verteilt angeordneter Düsen 26, 27 auf, die vorzugsweise als auswechselbare Düseneinsätze ausgebildet sind. Die Zahl der umfangsseitig verteilt angeordneten Düsen 26, 27 beträgt vorzugsweise 5 bis 8, insbesondere 6. Die Sprühachsen der Düsen 26, 27 sind so ausgerichtet, daß das aus ihnen austretende Fluid zu einem gemeinsamen axialen Punkt, einem Brennpunkt, gesprüht wird, damit ein kegelförmiger Fluidschleier 28, 29 im Strömungskanal 6 gebildet wird. Der Düsenring 24, 25 wird dazu von einer in den Strömungskanal 6 sich erstreckenden und negativ gegen die Rohrachse 7 geneigten Stirnteilfläche des ausgangsseitigen Flansches 10, 11 gebildet. Der verbleibende Teil der Stirnfläche 30, 31 des ausgangsseitigen Flansches 10, 11 bildet eine Anflanschfläche für ein Anschlußteil 4, 5.

Die den ausgangsseitigen Flansch 10, 11 bildende Ringkammer 18, 19 ist vorzugsweise derart in ein Flanschstück integriert, daß die Ringkammer 18, 19 sich vorzugsweise im wesentlichen entlang der von der Rohrwandung 12, 13 bereitgestellten Stirnfläche 22, 23 erstreckt und außen ein Flanschansatzstück 32, 33 trägt zur Vergrößerung der Flanschstirnfläche 30, 31. Der ausgangsseitige Flansch 10, 11 ist dabei vorzugsweise ein glatter Flansch, der über Kraftschluß eine dichte Verbindung erlaubt.

Bei dem in Fig. 1 gezeigten Ausführungsbeispiel sind zwei Segment-Rohrabschnitte 3, 4 aneinander geflanscht, indem der ausgangsseitige Flansch 10 des Segment-Rohrabschnitts 4 an dem eingangsseitigen Flansch 9 des nachfolgenden Segment-Rohrabschnitts 4 kraftschlüssig anliegt. Als Flanschverschlußmittel können die bekannten Flanschverschlüsse, wie Flanschschrauben, Flanschklammern etc., Verwendung finden. Bei dem dargestellten Ausführungsbeispiel sind Flanschschrauben 34 als Verschlußmittel vorgesehen. Die Zahl der aneinander flanschbaren Segment-Rohrabschnitte ist wählbar und liegt vorzugsweise bei 2 bis 5 Segment-Rohrabschnitten, die über ihre ein- und ausgangsseitigen Flansche lösbar verbindbar sind.

Dadurch, daß der ausgangsseitige Flansch 10, 11 von der Ringkammer 18, 19 mit Düsenring 24, 25 gebildet wird, fördern die Düsen 26, 27 einen kegelförmigen Fluidschleier jeweils in einen in Strömungsrichtung nachfolgenden Rohrabschnitt 3 oder in den ausgangsseitig anflanschbaren Strömungsauslaß 5.

Der Strömungauslaß 5 umfaßt einen Eingangsflansch 35, von dem sich ein Rohrwandungsstück 36 erstreckt, das ein Endstück des Strömungskanals 6 bildet. Vorzugsweise ist der Strömungsauslaß 5 ein Teilstück eines Segment-Rohrabschnitts 3, 4, bei dem der ausgangsseitige Flansch 10, 11 und gegebenenfalls ein Teilabschnitt der Rohrwandung 12, 13 fehlt. Das Rohrwandungsreststück 36 kann auch hier eine konisch verlaufende Wandstärke aufweisen. Der eingangsseitige Flansch 35 ist dann wie die eingangsseitigen Flansche 8, 9 als glatter Flansch ausgebildet.

Der Saugeinlaß 2 umfaßt ein Rohrwandungsstück 37, das an seiner Stirnseite 38 einen ausgangsseitigen Flansch 39 trägt. Dieser ausgangsseitige Flansch 39 ist wie die ausgangsseitigen Flansche 10, 11 der Segment-Rohrabschnitte 3, 4 ausgebildet, d.h. der Flansch 39 wird von einer Ringkammer 40 gebildet, die in ein Flanschstück integriert ist, und einen umlaufenden Düsenring bzw. Düsenkranz 41 mit Düsen 42 trägt, die einen kegelförmigen Fluidschleier 43 in den Strömungskanal 6 fördern. Die Ringkammer 40 ist über einen Stutzen 44 an eine Hochdruckfluidquelle anschließbar. Vorzugsweise ist der Saugeinlaß 2 ein Teilstück eines Segment-Rohrabschnitts 3, 4, bei dem der eingangsseitige Flansch 8, 9 und gegebenenfalls ein Teilstück der Rohrwandung 12, 13 fehlt. Das Rohrwandungsreststück 37 kann auch hier eine konisch verlaufende Wandstärke aufweisen.

Eine nicht dargestellte Hochdruckfluidquelle fördert ein Prozeßfluid, insbesondere Wasser, mit einem Düsenvordruck, der bei 300 bis 600 bar liegen kann, über die Stutzen 44, 20, 21 in die Ringkammern 40, 18, 19, so daß Wasserstrahlen mit hoher Geschwindigkeit aus den Düsen 42, 26, 27 austreten.

Für eine axiale Verschiebbarkeit der einzelnen Segment-Rohrabschnitte 3, 4 sowie des Saugeinlasses 2 und des Strömungsauslasses 5 ist dieses Strahlrohrteil vorzugsweise axial an einem nicht dargestellten Träger geführt. Um Wartungsarbeiten durchzuführen, insbesondere die Düsen 42, 26, 27 auszuwechseln, brauchen dann die jeweils aneinander befestigten Flansche nur lokal gelöst und die jeweiligen Strahlrohrteile voneinander beabstandet werden.

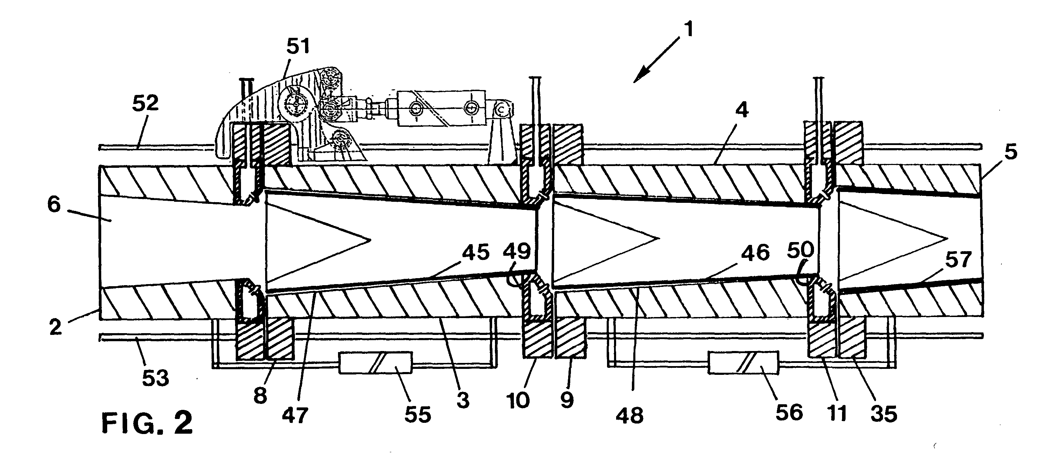

Ein weiteres in Fig. 2 dargestelltes Ausführungsbeispiel unterscheidet sich von dem vorstehend beschriebenen dadurch, daß in die Segment-Rohrabschnitte 3, 4 eine Schutzverkleidung 45, 46 auswechselbar eingesetzt ist, die eine Innenwandung 47, 48 vor Verschleiß schützt. Diese Schutzverkleidung kann von einem einsteckbaren Schutzrohr gebildet werden. Die Schutzverkleidung 45, 46 erstreckt sich dabei vorzugsweise über den Bereich der Innenwandung 47, 48, der hinter dem Brennpunkt des Strahlenkegels 43, 28 liegt, da dort die heftigste Verwirbelung und damit die stärkste Abnutzung stattfindet. Desweiteren erstreckt sich die Schutzverkleidung 45, 46 vorzugsweise bis über eine Innenwandungsfläche 49, 50 des jeweiligen ausgangsseitigen Flansches 10, 11, um diese ebenfalls vor starker Abnutzung zu schützen.

Neben den Segment-Rohrabschnitten 3, 4 können auch in den Strömungsauslaß 5 und/oder den Saugeinlaß 2 Schutzverkleidungen 57 einsetzbar sein.

Als Flanschverschlußmittel sind in Fig. 2 hydraulisch arbeitende Hammerkopfverschlüsse 51 vorgesehen, von denen einer exemplarisch dargestellt ist.

Desweiteren sind bei dem in Fig. 2 dargestellten Ausführungsbeispiel Führungsschienen 52, 53 eines Trägers dargestellt, an denen das beschriebene Hochdruck-Strahlrohr axial verschiebar geführt ist. Vorzugsweise stehen die Flansche nach Art von Nut und Feder mit den Führungsschienen 52, 53 in Wirkeingriff.

Für eine axiale Verschiebung der einzelnen Strahlrohrteile können Hydraulikzylinder 55, 56 an jeweils benachbarten Strahlrohrteilen angreifen, um diese bedarfsbezogen voneinander zu beabstanden.

## Patentansprüche

1. Mehrstufiges Hochdruck-Strahlrohr zur naßmechanischen Behandlung körniger Materialien und deren Schlämmungen mit einem eingangsseitigen Saugeinlaß (2) und einem ausgangsseitigen Strömungsauslaß (5) und mehreren dazwischen lösbar hintereinander befestigten Segment-Rohrabschnitten (3, 4), die jeweils eine an eine Hochdruckfluidquelle (44, 20, 21) anschließbare Ringkammer (40, 18, 19) aufweisen, die einen umlaufenden Düsenring (41, 24, 25) mit einer Mehrzahl umfangsseitig verteilt angeordneter Düsen (42, 26, 27) zum Einspeisen eines fluiden Triebstrahls in Form eines kegelförmigen Schleiers (43, 28, 29) in das Rohrinnere des jeweils nachfolgenden Segment-Rohrabschnitts (3, 4), und die Segment-Rohrabschnitte (3, 4) eingangs- und ausgangsseitig befestigte Flansche (8, 10; 9, 11) tragen, wobei der ausgangsseitige Flansch (10, 11) von der Ringkammer (18, 19) gebildet wird, dadurch gekennzeichnet, daß zwischen den eingangs- und ausgangsseitig befestigten Flanschen (8, 10; 9, 11) sich eine Rohrwandung (12, 13) mit in Strömungsrichtung zunehmender Wandstärke erstreckt.

2. Mehrstufiges Hochdruck-Strahlrohr nach Anspruch 1, dadurch gekennzeichnet, daß der eingangsseitige Flansch (9) eines Segment-Rohrabschnittes (4) kraftschlüssig mit dem ausgangsseitigen Flansch (10) eines vorausgehenden Segment-Rohrabschnitts (3) verbindbar ist.

3. Mehrstufiges Hochdruck-Strahlrohr nach Anspruch 1 oder 2, dadurch gekennzeichnet, daß die Düsen (26, 27) des Düsenrings (24, 25) als auswechselbare Düseneinsätze ausgebildet sind.

4. Mehrstufiges Hochdruck-Strahlrohr nach einem der Ansprüche 1 bis 3, dadurch gekennzeichnet, daß die Düsen (26, 27) in einem mit negativen Sturz zur Strömungsrichtung verlaufenden Stirnflächenteilstück des jeweiligen ausgangsseitigen Flansches (10, 11) angeordnet sind.

5. Mehrstufiges Hochdruck-Strahlrohr nach einem der Ansprüche 1 bis 4, dadurch gekennzeichnet, daß die Wandstärke der Segment-Rohrabschnitte (3, 4) unter Bildung eines kegelförmig sich verjüngenden Rohrinneren (14, 15) in Strömungsrichtung zunimmt.

6. Mehrstufiges Hochdruck-Strahlrohr nach einem der Ansprüche 1 bis 5, dadurch gekennzeichnet, daß die Segment-Rohrabschnitte (3, 4) eine zylinderförmige Außenwandung besitzen.

7. Mehrstufiges Hochdruck-Strahlrohr nach einem der Ansprüche 1 bis 6, dadurch gekennzeichnet, daß der Saugeinlaß (2) von einem Segment-Rohrabschnitt-Teilstück mit einem ausgangsseitigen Flansch (39) und einem davor sich erstreckenden Rohrwandungsstück (37) gebildet wird.

8. Mehrstufiges Hochdruck-Strahlrohr nach einem der Ansprüche 1 bis 7, dadurch gekennzeichnet, der Strömungsauslaß von einem Segment-Rohrabschnitt-Teilstück mit eingangsseitigem Flansch (35) und einem anschließenden Rohrwandungsstück (36) gebildet wird.

9. Mehrstufiges Hochdruck-Strahlrohr nach einem der Ansprüche 1 bis 8, dadurch gekennzeichnet, daß in die Segment-Rohrabschnitte (3, 4) eine auswechselbare, eine Rohrinnenwandung (47, 48) zumindest teilweise überdeckende Verschleißschutzverkleidung (45, 46) einsetzbar ist.

10. Mehrstufiges Hochdruck-Strahlrohr nach Anspruch 9, dadurch gekennzeichnet, daß die Verschleißschutzverkleidung (45, 46) von einem auswechselbaren Innenrohr gebildet wird, das eine Innenwandungsfläche (49, 50) des ausgangsseitigen Flansches (10, 11) zumindest teilweise abdeckt.

11. Mehrstufiges Hochdruck-Strahlrohr nach einem der Ansprüche 1 bis 10, dadurch gekennzeichnet, daß die Segment-Rohrabschnitte (3, 4) sowie Saugeinlaß (2) und Strömungsauslaß (5) an einem Träger axial verschiebbar geführt sind.

12. Mehrstufiges Hochdruck-Strahlrohr nach Anspruch 11, dadurch gekennzeichnet, daß die Segment-Rohrabschnitte (3, 4) äußere Führungskufen aufweisen, die in stationären Führungsschienen (52, 53) des Trägers laufen.

13. Mehrstufiges Hochdruck-Strahlrohr nach Anspruch 12, dadurch gekennzeichnet, daß die ein- und ausgangsseitigen Flansche (8, 9; 10, 11) der Segment-Rohrabschnitte (3, 4) sowie die Flansche (35, 39) von Strömungsauslaß (5) und Saugeinlaß (2) jeweils eine Führungsnut zum schlittenartigen Positionieren auf einem Träger mit Führungsfedern aufweist.

14. Mehrstufiges Hochdruck-Strahlrohr nach einem der Ansprüche 1 bis 13, dadurch gekennzeichnet, daß die Flansche (39, 8; 10,9; 11, 35) benachbarter Strahlrohrteile (2, 3, 4, 5) mittels eines hydraulisch arbeitenden Hammerkopfverschlusses (51) dicht verschließbar sind.

## Claims

1. A multi-stage high pressure jet pipe for mechanical wet treatment of granular materials and their sludges, with a suction intake (2) at the inlet end and a flow exit (5) at the outlet end, and several pipe sections (3, 4) fixed detachably one behind the other, each of them having an annular chamber (40, 18, 19), connectable to a high-pressure source (44, 20, 21), which carries a rotating nozzle ring (41, 24, 25) with several nozzles (42, 26, 27) spaced out on the periphery, for feeding to the tubular inside of the respective subsequent pipe sections (3, 4) a liquid propelling jet in the form of a conical sheet (43, 28, 29), the pipe sections (3, 4) carrying the flanges (8, 10; 9, 11) fixed at the inlet and the outlet ends, the flange (10, 11) at the outlet end being formed by the annular chamber (18, 19), characterised by the fact that a tubular wall (12, 13) with a thickness increasing in the direction of the flow extends between the flanges (8, 10; 9, 11) fixed at the inlet and the outlet ends.

2. A multi-stage high pressure jet pipe according to Claim 1, characterised by the fact that the flange (9) at the inlet end of a pipe section (4) is firmly connectable to the outlet end flange (10) of an upstream pipe section (3).

3. A multi-stage high-pressure jet pipe according to Claim 1 or 2, characterised by the fact that the nozzles (26, 27) on the nozzle ring (24, 25) are designed as replaceable nozzle inserts.

4. A multi-stage high pressure jet pipe according to one of the Claims 1 to 3, characterised by the fact that the nozzles (26, 27) are arranged in a bevel of an end piece of the respective outlet end flange (10, 11) set at a negative angle to the direction of flow.

5. A multi-stage high pressure jet pipe according to one of the Claims 1 to 4, characterised by the fact that the thickness of the wall of the pipe sections (3, 4) increases in the direction of the flow while forming a diminishing, conical space within the pipe (14, 15).

6. A multi-stage, high pressure jet pipe according to one of the Claims 1 to 5m characterised by the fact that the pipe sections (3, 4) have a cylindical outer wall.

7. A multi-stage, high pressure jet pipe according to one of the Claims 1 to 6, characterised by the fact that the suction intake (2) is formed by a part of a pipe section with a flange (39) at the outlet end and a piece of the pipe wall (37) extending before it.

8. A multi-stage, high pressure jet pipe according to one of the Claims 1 to 7, characterised by the fact that the flow outlet is formed by a part of a pipe section with a flange (35) at the inlet end and an adjoining piece of the pipe wall (36).

9. A multi-stage high pressure jet pipe according to one of the Claims 1 to 8, characterised by the fact that a replaceable wear protection lining (45, 46) covering the inside wall of the pipe (47, 48) at least partly can be inserted in the pipe sections (3, 4).

10. A multi-stage high pressure jet pipe according to Claim 9, characterised by the fact that the wear protection lining (45, 46) is formed by a replaceable inner pipe which covers an inner wall surface (49, 50) of the outlet end flange (10, 11) at least partly.

11. A multi-stage high pressure jet pipe according to one of the Claims 1 to 10, characterised by the fact that the pipe sections (3, 4) as well as the suction intake (2) and the flow exit (5) are axially slidable on a carrier.

12. A multi-stage high pressure jet pipe according to Claim 11, characterised by the fact that the pipe sections (3, 4) have external guide skids running in stationary guide rails (52, 53) of the carrier.

13. A multi-stage high pressure jet pipe according to Claim 12, characterised by the fact that the flanges at the inlet and the outlet ends (8, 9; 10, 11) of the pipe sections (3, 4) and the flanges (35, 39) at the flow exit (5) and the suction intake (2) each has a guide groove for slide-like positioning on a carrier with guide springs.

14. A multi-stage high pressure jet pipe according to one of the Claims 1 to 13, characterised by the fact that the flanges (39, 8; 10, 9; 11, 35) of the adjacent parts of the jet pipe (2, 3, 4, 5) are tightly lockable by means of a hydraulically operated hammer-head locking device (51).

## Revendications

1. Ejecteur à haute pression à plusieurs étages pour le traitement mécanique humide de matériaux granulaires et de leurs boues, comprenant une admission d'aspiration (2) côté entrée et une émission de courant (5) côté sortie, ainsi que plusieurs tronçons de tubes segments (3, 4) fixés de façon démontable l'un à la suite de l'autre, entre l'admission et l'émission, qui présentent chacun une chambre annulaire (40, 18, 19) pouvant être raccordée à une source de fluide sous haute pression (44, 20, 21), chaque chambre portant une couronne de buses circonférentielle (41, 24, 25) munie d'une pluralité de buses (42, 26, 27) réparties sur la circonférence qui servent à injecter un jet de fluide moteur sous la forme d'une nappe conique (43, 28, 29) dans le volume intérieur du tronçon de tube segment (3, 4) qui fait suite à cette couronne et les tronçons de tubes segments (3, 4) portant des brides (8, 10 ; 9, il) fixées côté entrée et côté sortie, la bride côté sortie (10, 11) étant formée par la chambre annulaire (18, 19), caractérisé en ce qu'entre les brides (8, 10 ; 9, 11) fixées côté entrée et côté sortie, s'étend une paroi de tube (12, 13) dont l'épaisseur de paroi croît dans le sens de l'écoulement.

2. Ejecteur à haute pression à étages multiples selon la revendication 1, caractérisé en ce que la bride côté entrée (9) d'un tronçon de tube segment (4) peut être assemblée par une liaison par action de force à la bride côté sortie (10) d'un tronçon de tube segment précédent (3).

3. Ejecteur à haute pression à étages multiples selon la revendication 1 ou 2, caractérisé en ce que les buses (26, 27) de la couronne de buses (24, 25) sont constituées par des inserts de buses interchangeables.

4. Ejecteur à haute pression à étages multiples selon l'une des revendications 1 à 3, caractérisé en ce que les buses (26, 27) sont disposées dans une portion de surface frontale de la bride côté sortie correspondante (10, 11) qui s'étend avec une pente négative par rapport au sens de l'écoulement.

5. Ejecteur à haute pression à étages multiples selon l'une des revendications 1 à 4, caractérisé en ce que l'épaisseur de paroi des tronçons de tubes segments (3, 4) croît dans le sens de l'écoulement en formant un volume intérieur de tube (14, 15) qui se rétrécit en cône.

6. Ejecteur à haute pression à étages multiples selon l'une des revendications 1 à 5, caractérisé en ce que les tronçons de tubes segments (3, 4) possèdent une paroi extérieure cylindrique.

7. Ejecteur à haute pression à étages multiples selon l'une des revendications 1 à 6, caractérisé en ce que l'admission d'aspiration (2) est formée par une portion d'un tronçon de tube segment possédant une bride côté sortie (39) et une portion de paroi tubulaire (37) qui s'étend en amont de cette bride.

8. Ejecteur à haute pression à étages multiples selon l'une des revendications 1 à 7, caractérisé en ce que l'émission de courant est formée par une portion d'un tronçon de tube segment possédant une bride côté entrée (35) et une portion de paroi tubulaire (36) qui y fait suite.

9. Ejecteur à haute pression à étages multiples selon l'une des revendications 1 à 8, caractérisé en ce qu'une chemise protectrice anti-usure interchangeable (45, 46) qui recouvre au moins partiellement la paroi intérieure (47, 48) du tube peut être insérée dans les tronçons de tubes segments (3, 4).

10. Ejecteur à haute pression à étages multiples selon la revendication 9, caractérisé en ce que la chemise protectrice anti-usure (45, 46) est formé d'un tube intérieur interchangeable qui recouvre au moins partiellement une surface de paroi intérieure (49, 50) de la bride côté sortie (10, 11).

11. Ejecteur à haute pression à étages multiples selon l'une des revendications 1 à 10, caractérisé en ce que les tronçons de tubes segments (3, 4), ainsi que l'admission d'aspiration (2) et l'émission de courant (5) sont guidés sur un support de façon à pouvoir coulisser axialement.

12. Ejecteur à haute pression à étages multiples selon la revendication 11, caractérisé en ce que les tronçons de tubes segments (3, 4) présentent des patins de guidage extérieurs qui circulent dans des rails de guidage fixes (52, 53) du support.

13. Ejecteur à haute pression à étages multiples selon la revendication 12, caractérisé en ce que les brides côté entrée et côté sortie (8, 9 ; 10, il) des tronçons de tubes segments (3, 4), ainsi que les brides (35, 39) de l'émission de courant (5) et de l'admission d'aspiration (2) présentent chacune une rainure de guidage qui sert à les positionner à la façon de chariots sur un support présentant des languettes de guidage.

14. Ejecteur à haute pression à étages multiples selon l'une des revendications 1 à 13, caractérisé en ce que les brides (39, 8 ; 10, 9 ; 11, 35) de parties adjacentes (2, 3, 4, 5) de l'éjecteur peuvent être serrées hermétiquement à l'aide d'un moyen de serrage (51) en forme de tête de marteau à commande hydraulique.
